# FASCICULE DE BREVET EUROPEEN

(11) **EP 3 461 711 B1**
(45) Date de publication et mention de la délivrance du brevet: **10.05.2023**
(21) Numéro de dépôt: 18197275.3
(22) Date de dépôt: 27.09.2018
(51) Int. Cl.: B61D 13/00, B61D 29/00, B60Q 1/28, B60Q 1/32, F21S 43/14

(54) **VÉHICULE FERROVIAIRE COMPRENANT UNE BANDE LUMINEUSE**
SCHIENENFAHRZEUG, DAS EINEN LEUCHTSTREIFEN UMFASST
RAIL VEHICLE COMPRISING A LIGHT STRIP

(30) Priorité: 29.09.2017 FR 1759112
(43) Date de publication de la demande: 03.04.2019
(73) Titulaire: ALSTOM Transport Technologies, 93400 Saint-Ouen (FR)
(72) Inventeur: FAURE, Bertrand, 59110 La Madeleine (FR)
(74) Mandataire: Lavoix

(56) Documents cités:
- WO-A1-2012/136567
- DE-A1- 19 745 993
- DE-A1-102012 003 200
- DE-A1-102013 219 121
- DE-U1-202017 101 657
- FR-A1- 2 370 606
- US-B2- 7 025 481

## Description

L'invention concerne un véhicule ferroviaire comportant une bande lumineuse placée sur un carrossage externe de ce véhicule.

On connaît des véhicules ferroviaires, qui sont munis d'un ou plusieurs phares placés sur une face avant de ce véhicule. Ces phares sont typiquement configurés pour éclairer la voie ferrée devant un train pour permettre à un agent de conduite du train de voir la voie lorsqu'il fait nuit.

WO 2012 136567 A1 décrit, par exemple, un véhicule ferroviaire comprenant des bandes lumineuses fixées sur une extrémité avant, autour des phares.

Toutefois, lorsque le train est amené dans une zone dans laquelle des piétons sont présents à proximité des voies, comme c'est le cas des tramways, ces phares ne permettent pas au train d'être visible de loin. Il en résulte un risque de collision accrue entre les piétons et le train.

C'est à ces inconvénients qu'entend plus particulièrement remédier l'invention en proposant un véhicule ferroviaire qui présente une visibilité extérieure accrue lorsqu'il circule avec de mauvaises conditions de visibilité.

À cet effet, l'invention concerne un véhicule ferroviaire comprenant :
- des extrémités avant et arrière et des faces latérales,
- une bande lumineuse, fixée à l'extérieur du véhicule ferroviaire et comportant une source lumineuse, et
- une unité d'alimentation électrique apte à alimenter électriquement la source lumineuse.

Conformément à l'invention, la bande lumineuse est fixée au moins sur l'une des extrémités avant ou arrière et sur les faces latérales et s'étend, sur chacune des faces latérales, sur au moins 50% de la longueur de cette face latérale, tandis que l'unité d'alimentation électrique comporte un module photovoltaïque fixé à l'extérieur du véhicule ferroviaire.

Grâce à l'invention, les bandes lumineuses épousent au moins en partie la forme du train et permettent ainsi, lorsqu'elles sont illuminées, de faire percevoir la taille et la forme du train dans l'obscurité.

Selon des aspects avantageux mais non obligatoires de l'invention, un tel véhicule ferroviaire peut incorporer une ou plusieurs des caractéristiques suivantes, prises dans toute combinaison techniquement admissible :
- Le véhicule comporte un carrossage formant au moins en partie les faces latérales et la bande lumineuse est fixée sur ce carrossage.
- La bande lumineuse s'étend le long d'une arête séparant des portions de faces du carrossage.
- La bande lumineuse s'étend sur toute la longueur des faces latérales.
- La bande lumineuse est un film souple.
- La source lumineuse comporte une diode électroluminescente ou une diode électroluminescente organique.
- La bande lumineuse comporte une couche de protection extérieure transparente qui recouvre la source lumineuse.

L'invention sera mieux comprise et d'autres avantages de celle-ci apparaîtront plus clairement à la lumière de la description qui va suivre, d'un mode de réalisation d'un véhicule ferroviaire, conforme à son principe, donnée uniquement à titre d'exemple et faite en référence aux dessins annexés, dans lesquels :
- la figure 1 représente schématiquement, selon une vue en perspective, un véhicule ferroviaire pourvu d'une bande lumineuse selon l'invention ;
- la figure 2 est une vue en coupe schématique d'un exemple de placement de la bande lumineuse de la figure 1.
- la figure 3 est une vue en coupe schématique d'une portion de la bande lumineuse de la figure 1.

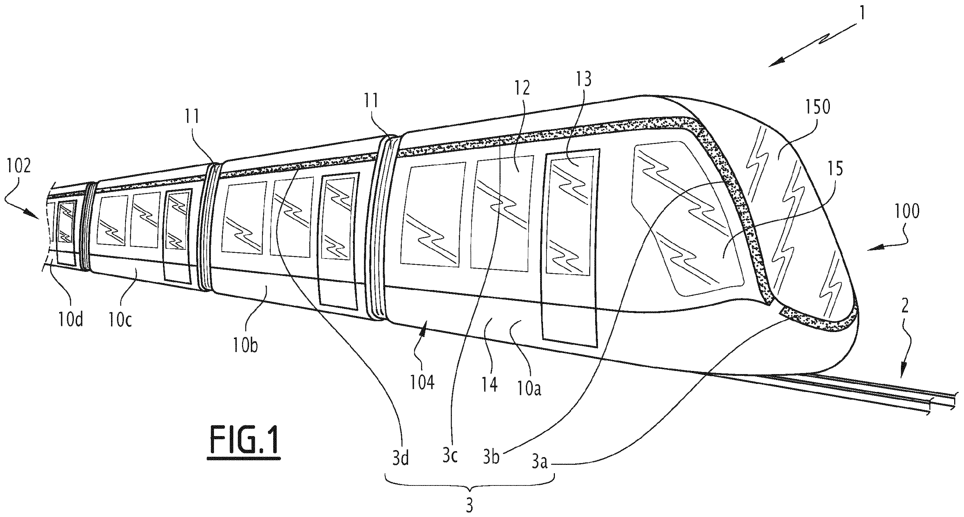

La figure 1 représente un véhicule ferroviaire 1, apte à circuler sur une voie ferrée 2. Dans cet exemple, le véhicule 1 est un tramway.

Le véhicule 1 comporte une extrémité avant 100, une extrémité arrière 102 et des faces extérieures latérales 104, dont seule une est visible sur la figure 1.

Ici, le véhicule 1 comporte une pluralité de caisses 10a, 10b, 10c et 10d montées sur des bogies, non illustrés. Ces caisses 10a, 10b, 10c et 10d sont alignées entres elles le long d'un axe longitudinal du véhicule 1 et sont couplées deux à deux par des articulations 11 pour former un corps du véhicule 1.

Chaque caisse 10a, 10b, 10c et 10d comporte également une partie avant, une partie arrière et des faces latérales. Les faces avant et arrière respectives de chaque paire de caisses 10a, 10b, 10c et 10d adjacentes sont disposées face à face et sont couplées deux à deux par une des articulations 11. L'extrémité avant de la caisse 10a située à l'avant du véhicule 1 correspond à l'extrémité avant du véhicule 1. De même, l'extrémité arrière de la caisse 10d située à l'arrière du véhicule 1 correspond à l'extrémité arrière du véhicule 1.

En variante, le véhicule 1 ne comporte qu'une seule caisse. Dans ce cas, les zones d'articulation 11 sont omises.

Chaque caisse 10a, 10b, 10c et 10d comporte également des ouvertures et un carrossage extérieur 14. Les ouvertures sont par exemple des vitres 12 et/ou des portes 13. Elles sont disposées sur les faces latérales de cette caisse 10a, 10b, 10c et 10d. Le carrossage extérieur 14 est rapporté sur chaque caisse 10a, 10b, 10c et 10d et comporte par exemple des tôles métalliques ou des plaques en matière plastique ou composite. Ainsi, chaque face latérale 104 du véhicule 1 est formée par les faces latérales correspondantes de chacune des caisses 10a, 10b, 10c et 10d et, plus précisément, par le carrossage de ces caisses 10a, 10b, 10c et 10d. Avantageusement, des éléments additionnels de carrossage sont disposés sur une ou plusieurs de ces caisses, par exemple pour masquer des équipements situés sur une toiture du véhicule 1.

Au moins l'une ou l'autre des extrémités avant 100 ou arrière 102 comporte une cabine pour la conduite 15 du véhicule 1 par un opérateur.

Le véhicule 1 comporte en outre une bande lumineuse 3, fixée à l'extérieur du véhicule 1, ici sur le carrossage du véhicule 1, comme décrit ci-après. En variante, le carrossage 14 est omis et la bande 3 est directement fixée sur les caisses 10a, 10b, 10c et 10d.

La bande 3 est apte à émettre un rayonnement lumineux lorsqu'elle est alimentée électriquement par une unité d'alimentation d'énergie 16 du véhicule 1. L'unité d'alimentation 16 est ici une source de tension continue placée à l'intérieur du véhicule 1 et qui est apte à délivrer une tension électrique, par exemple égale à 24V ou à 110V. Cette unité est elle-même alimentée par une source d'énergie, par exemple une batterie du véhicule 1 ou par l'intermédiaire d'un réseau d'alimentation électrique extérieur du véhicule 1, tel qu'une caténaire. Selon une autre variante, l'unité d'alimentation 16 comporte un module photovoltaïque placé à l'extérieur du véhicule 1, par exemple en toiture du véhicule 1.

La bande 3 s'étend au moins sur l'une ou l'autre de l'extrémité avant 100 et arrière 102 et sur au moins 50% de la longueur des faces latérales 104, de préférence au moins 70% ou au moins 80% de la longueur des faces latérales 104. Ici, la bande 3 s'étend sur toute la longueur des faces latérales 104. La longueur est ici mesurée selon la direction longitudinale du véhicule 1.

Ici, la bande 3 ne s'étend pas d'un seul tenant mais est partagée en une pluralité de portions de bande 3a, 3b, 3c, 3d, contiguës les unes aux autres sauf au niveau des zones d'articulation 11. Ces portions de bandes sont ici analogues entre elles et ne diffèrent les unes des autres que par leurs dimensions et leurs positions respectives.

Dans cet exemple, une première portion 3a de la bande 3 s'étend horizontalement le long de l'extrémité avant 100 du véhicule 1, par exemple le long et en dessous d'un pare-brise 150 de la cabine de pilotage 15. Deux deuxièmes portions 3b de la bande 3, dont seule une est visible sur la figure 1, s'étendent essentiellement verticalement de chaque côté du pare-brise 150, le long de ce pare-brise 150, jusqu'au carénage additionnel de toiture. L'extrémité inférieure de chaque deuxième portion 3b est attenante à une des extrémités de la bande 3a de façon à assurer une continuité au moins visuelle de la bande 3. Deux troisièmes portions 3c de bande 3 s'étendent chacune essentiellement horizontalement le long de la face 104 correspondante de cette caisse 10a jusqu'à atteindre l'articulation 11. Les caisses 10b et 10c présentent chacune, sur chacune de leurs faces latérales respectives, une portion 3d de bande 3 qui s'étend dans le prolongement de la portion 3c correspondante de bande 3. Ici, le véhicule 1 est une rame de tramway réversible pourvue à ses deux extrémités longitudinales de cabines de pilotage 15 identiques. Les extrémités 100 et 102 présentent donc une même forme. Par conséquent, l'extrémité 102 comporte des portions 3a et 3b de bande 3 qui sont disposées de façon analogue à la disposition des portions 3a et 3b de l'extrémité 100 précédemment décrite. La caisse 10d comporte en outre des portions 3c de bande 3 analogues à celles de la caisse 10a.

Chacune des portions 3a, 3b, 3c et 3d présente ici une largeur supérieure à 1cm et inférieure à 50cm, de préférence comprise entre 5 et 30 cm. Dans cette description, la direction horizontale est définie parallèlement par rapport à la voie ferrée 2.

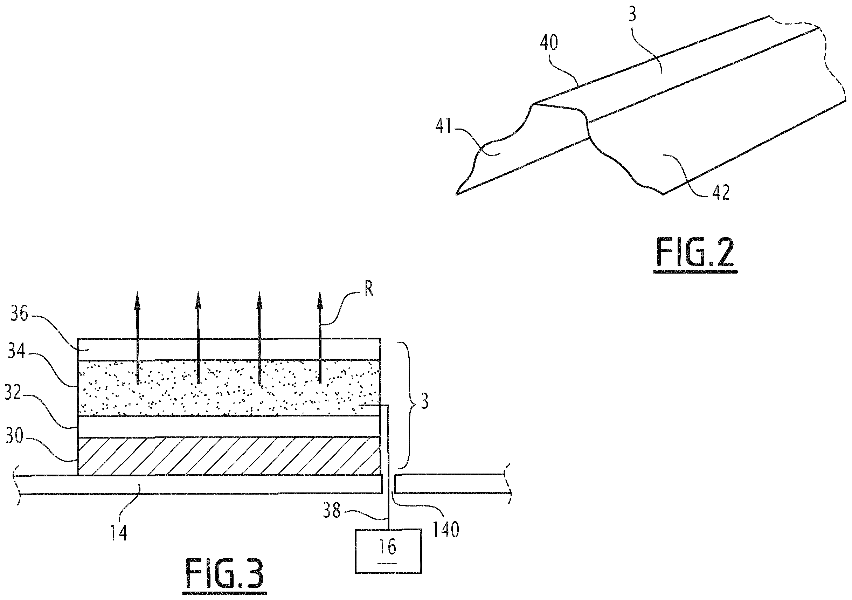

De préférence, la bande 3 est disposée le long d'une arête 40 ou ligne d'angle qui sépare deux portions 41, 42 d'une face du carrossage 14 qui présentent des orientations différentes, comme illustré à la figure 2.

Comme représenté à la figure 3, la bande 3 se présente ici sous la forme d'un film souple de forme essentiellement plane. Par « film », on entend que l'épaisseur de la bande 3 est au moins dix fois inférieure, de préférence au moins cent fois inférieure, à la plus petite entre la longueur et la largeur de la bande 3, cette longueur et cette largeur étant mesurées dans le plan de la bande 3.

Dans cet exemple, chaque portion de la bande 3 comporte un empilement incluant un support de fixation 30, une couche intermédiaire de protection 32, une source lumineuse active 34 et une couche extérieure de protection 36, superposés les uns avec les autres, dans cet ordre, du carrossage 14 vers l'extérieur. Cet empilement présente avantageusement une épaisseur inférieure ou égale à 5 mm, de préférence à 3 mm, de préférence encore à 1mm. De préférence, l'empilement présente l'épaisseur la plus faible possible, de façon à éviter toute surlargeur excessive au niveau du carrossage 14, qui pourrait nuire aux performances aérodynamiques ou nuire à la facilité d'entretien, par exemple le lavage, du véhicule 1.

Le support 30 est destiné à être fixé en contact avec le carrossage du véhicule 1 de manière à solidariser la bande 3 sans degré de liberté avec le véhicule 1. Par exemple, le support 30 est un film en aluminium, ou une tôle métallique. Cette fixation est réalisée à l'aide d'un système de fixation, tel qu'un adhésif ou un système vis/écrou.

La couche intermédiaire 32 est disposée entre le support 30 et la source lumineuse 34 et a pour fonction de protéger le support 30 contre la corrosion et autres dégradations provenant de l'exposition de la bande 3 à l'extérieur du véhicule 1. La couche intermédiaire 32 est ici formée d'une couche de peinture de protection. En variante, la couche intermédiaire 32 peut être omise, notamment si on souhaite réduire l'épaisseur de la bande 3.

La source lumineuse 34 émet un rayonnement lumineux R lorsqu'elle est alimentée par l'unité 16. A cet effet, la source lumineuse 34 est raccordée à l'unité 16, par exemple au moyen d'un câble électrique 38 qui passe au travers d'un orifice traversant 140 ménagé dans le carrossage 14.

Le rayonnement lumineux R émis présente une longueur d'onde comprise dans le domaine visible, c'est-à-dire comprise entre 350nm et 800nm. Le rayonnement R est ici monochromatique.

Le rayonnement lumineux R présente en outre avantageusement un éclairement lumineux supérieur ou égal à 100 lux, de préférence supérieur ou égal à 500 lux, de préférence encore supérieur ou égal à 1000 lux.

La source lumineuse 34 n'émet le rayonnement lumineux R que lorsqu'elle est alimentée par l'unité 16. Ainsi, des films fluorescents ou rétro-réfléchissants ne sont pas des bandes lumineuses au sens de l'invention.

La source lumineuse 34 présente ici une forme de feuille souple et s'étend continûment sur au moins 90%, de préférence au moins 95%, de la superficie de la portion de bande. Cette feuille est fixée à la couche intermédiaire 32, par exemple, au moyen d'une couche de colle ou d'adhésif double face ou encore par laminage.

Par exemple, la source lumineuse 34 est un module à diode électroluminescente, connu sous l'acronyme LED pour « light emitting diode » en langue anglaise.

En variante, la source lumineuse 34 est un module à diode électroluminescente organique, connu sous l'acronyme OLED pour « organic light emitting diode » en langue anglaise. Dans ce cas, la longueur d'onde de la lumière émise par la source lumineuse 34 peut avantageusement être sélectivement modifiée par un utilisateur, par exemple en modifiant des paramètres d'alimentation électrique de la source lumineuse 34 au moyen d'une interface de sélection du véhicule 1. Cela permet par exemple d'afficher, au moyen de la bande 3, une couleur différente en fonction de la ligne sur laquelle circule le véhicule 1, pour faciliter son identification par des voyageurs. Cela permet par exemple également d'afficher, au moyen de la bande 3, une couleur différente suivant si le véhicule est en service commercial ou non.

La couche de protection 36 recouvre la source lumineuse 34 pour la protéger contre des dégradations résultant de l'exposition de la bande 3 aux conditions environnementales, telles que de l'humidité ou un rayonnement ultraviolet. Par exemple, la couche de protection 36 est un vernis de protection.

Avantageusement, le véhicule comprend des moyens de commande de l'unité d'alimentation électrique 16, propres à commander avec une période prédéterminée l'alimentation électrique de la source lumineuse 34. La période prédéterminée est, par exemple, de l'ordre de la seconde.

Les moyens de commande sont, par exemple, activés via l'interface de sélection. Un opérateur conduisant le véhicule 1 est ainsi apte, via l'interface de sélection, à commander le clignotement de la source lumineuse 34, notamment lors d'un changement de direction du véhicule 1 ou lors d'une situation de danger.

Le véhicule 1 définit deux côté latéraux de part et d'autre d'un premier plan du véhicule s'étendant parallèlement à un axe longitudinal et à un axe vertical du véhicule 1. Ces côtés latéraux correspondent par exemple aux faces latérales 104. Avantageusement, le véhicule 1 comprend une bande 3 disposée le long de chaque côté latéral du véhicule, chaque bande étant associée à une unité d'alimentation électrique 16 distincte de manière à commander l'alimentation électrique des bandes de manière indépendante.

La couche de protection 36 est avantageusement transparente pour autoriser la propagation vers l'extérieur de la bande 3 des rayonnements émis par la source 34.

Grâce à la bande lumineuse 3, la visibilité du véhicule 1 est accrue. Comme la bande 3 s'étend le long des faces 104, elle permet d'illuminer et de faire apparaître plus efficacement la forme et l'encombrement de l'ensemble du véhicule 1, ce que ne permet pas un phare placé sur l'extrémité 100, car un tel phare n'éclaire que la zone qui se situe devant le véhicule 1 et n'éclaire donc pas le reste du véhicule 1.

De plus, de par sa forme et sa structure, la bande 3 s'adapte facilement à la forme du carrossage 14, notamment lorsque le carrossage présente une forme personnalisée. Une même bande 3 peut donc être utilisée sur différents types de véhicules 1 présentant des formes extérieures différentes.

L'invention s'applique également dans le cas où le véhicule 1 est autre chose qu'un tramway et où une visibilité accrue par temps sombre ou nocturne est recherchée. Par exemple, le véhicule 1 est un train de travaux. La bande 3 permet ainsi d'augmenter la visibilité de nuit d'un tel train par des ouvriers travaillant à proximité de ce train dans une zone de travaux. Selon une autre variante, le véhicule 1 est un convoi de wagons de marchandises tracté par une locomotive. La bande 3 permet alors d'augmenter la visibilité de ce convoi dans une installation de triage de marchandises.

## Revendications

1. Véhicule ferroviaire (1), comprenant :
- des extrémités avant (100) et arrière (102) et des faces latérales (104),
- une bande lumineuse (3), fixée à l'extérieur du véhicule ferroviaire (1) et comportant une source lumineuse (34), et
- une unité d'alimentation électrique (16) apte à alimenter électriquement la source lumineuse (34),
ce véhicule ferroviaire (1) étant **caractérisé en ce que** la bande lumineuse (3) est fixée au moins sur l'une des extrémités avant (100) ou arrière (102) et sur les faces latérales et s'étend, sur chacune des faces latérales (104), sur au moins 50% de la longueur de cette face latérale, et
**en ce que** l'unité d'alimentation électrique (16) comporte un module photovoltaïque fixé à l'extérieur du véhicule ferroviaire (1).

2. Véhicule (1) selon la revendication 1, **caractérisé en ce qu'**il comporte un carrossage (14) formant au moins en partie les faces latérales (104) et **en ce que** la bande lumineuse est fixée sur ce carrossage (14).

3. Véhicule (1) selon l'une des revendications précédentes, **caractérisé en ce que** la bande lumineuse (3) s'étend le long d'une arête (40) séparant des portions de faces (41, 42) du carrossage (14).

4. Véhicule (1) selon l'une des revendications précédentes, **caractérisé en ce que** la bande lumineuse (3) s'étend sur toute la longueur des faces latérales (104).

5. Véhicule (1) selon l'une des revendications précédentes, **caractérisé en ce que** la bande lumineuse (3) est un film souple.

6. Véhicule (1) selon l'une des revendications précédentes, **caractérisé en ce que** la source lumineuse (34) comporte une diode électroluminescente ou une diode électroluminescente organique.

7. Véhicule (1) selon l'une des revendications précédentes, **caractérisé en ce que** la bande lumineuse (3) comporte une couche de protection extérieure (36) transparente qui recouvre la source lumineuse (34).

## Patentansprüche

1. Schienenfahrzeug (1), umfassend:
- ein vorderes (100) und ein hinteres (102) Ende und Seitenflächen (104),
- ein Lichtband (3), das an der Außenseite des Schienenfahrzeugs (1) befestigt ist und eine Lichtquelle (34) umfasst, und
- eine Stromversorgungseinheit (16), die geeignet ist, um die Lichtquelle (34) elektrisch zu versorgen,
wobei dieses Schienenfahrzeug (1) **dadurch gekennzeichnet ist, dass** das Lichtband (3) an mindestens einem von dem vorderen (100) und dem hinteren Ende (102) und an den Seitenflächen befestigt ist und sich auf jeder der Seitenflächen (104) über mindestens 50 % der Länge dieser Seitenfläche erstreckt, und
dass die Stromversorgungseinheit (16) ein Solarmodul umfasst, das an der Außenseite des Schienenfahrzeugs (1) befestigt ist.

2. Fahrzeug (1) nach Anspruch 1, **dadurch gekennzeichnet, dass** es eine Karosserie (14) umfasst, die zumindest teilweise die Seitenflächen (104) bildet, und dass das Leuchtband an dieser Karosserie (14) befestigt ist.

3. Fahrzeug (1) nach einem der vorherigen Ansprüche, **dadurch gekennzeichnet, dass** sich das Lichtband (3) entlang einer Kante (40) erstreckt, die Abschnitte von Flächen (41, 42) der Karosserie (14) trennt.

4. Fahrzeug (1) nach einem der vorherigen Ansprüche, **dadurch gekennzeichnet, dass** sich das Lichtband (3) über die gesamte Länge der Seitenflächen (104) erstreckt.

5. Fahrzeug (1) nach einem der vorherigen Ansprüche, **dadurch gekennzeichnet, dass** der Lichtband (3) eine flexible Folie ist.

6. Fahrzeug (1) nach einem der vorherigen Ansprüche, **dadurch gekennzeichnet, dass** die Lichtquelle (34) eine lichtemittierende Diode oder eine organische lichtemittierende Diode umfasst.

7. Fahrzeug (1) nach einem der vorherigen Ansprüche, **dadurch gekennzeichnet, dass** das Lichtband (3) eine transparente äußere Schutzschicht (36) aufweist, die die Lichtquelle (34) bedeckt.

## Claims

1. Railway vehicle (1), comprising:
- front end (100) and rear end (102) and side faces (104), and
- a light strip (3) fixed to the outside of the railway vehicle (1) and comprising a light source (34), and
- a power supply unit (16) designed to electrically power the light source (34),
wherein this railway vehicle (1) is **characterized in that** the light strip (3) is fixed on at least either the front end (100) or rear end (102) and on the side faces, and extends over at least 50% of the length of each of the side faces (104), and
**in that** the power supply unit (16) is supplied by an electrical supply network of the railway vehicle.

2. Vehicle (1) according to claim 1, **characterized in that** it comprises bodywork (14) that at least partly forms the side faces (104) and **in that** the light strip is fixed on this bodywork (14).

3. Vehicle (1) according to one of the preceding claims, **characterized in that** the light strip (3) extends along an edge (40) separating sections of the faces (41, 42) of the bodywork (14).

4. Vehicle (1) according to one of the preceding claims, **characterized in that** the light strip (3) extends over the entire length of the side faces (104).

5. Vehicle (1) according to one of the preceding claims, **characterized in that** the light strip (3) is a flexible film.

6. Vehicle (1) according to one of the preceding claims, **characterized in that** the light source (34) comprises a light emitting diode or an organic light emitting diode.

7. Vehicle (1) according to one of the preceding claims, **characterized in that** the light strip (3) comprises a transparent outer protective layer (36) which covers the light source (34).
